(19) Europäisches Patentamt
European Patent Office
Office européen des brevets

(11) **EP 2 712 010 B1**

(12) **EUROPEAN PATENT SPECIFICATION**

(45) Date of publication and mention
of the grant of the patent:
**20.02.2019 Bulletin 2019/08**

(51) Int Cl.:
*H01M 4/525* (2010.01)     *H01M 4/505* (2010.01)
*C01G 53/00* (2006.01)     *H01M 4/131* (2010.01)

(21) Application number: **11865511.7**

(22) Date of filing: **20.12.2011**

(86) International application number:
**PCT/JP2011/079535**

(87) International publication number:
**WO 2012/157143 (22.11.2012 Gazette 2012/47)**

(54) **METHOD FOR PRODUCING A POSITIVE ELECTRODE ACTIVE MATERIAL FOR LITHIUM ION BATTERIES**

VERFAHREN ZUR HERSTELLUNG EINES POSITIVEN ELEKTRODENAKTIVMATERIALS FÜR LITHIUMIONENBATTERIEN

PROCÉDÉ DE PRODUCTION D'UN MATÉRIAU ACTIF D'ÉLECTRODE POSITIVE POUR BATTERIE AU LITHIUM-ION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.05.2011 JP 2011112590**

(43) Date of publication of application:
**26.03.2014 Bulletin 2014/13**

(73) Proprietor: **JX Nippon Mining & Metals Corporation
Tokyo 100-8164 (JP)**

(72) Inventors:
• **KAJIYA,Yoshio
Kitaibaraki-shi
Ibaraki 319-1535 (JP)**
• **KAWAHASHI,Yasuhiro
Kitaibaraki-shi
Ibaraki 319-1535 (JP)**
• **NAGASE,Ryuichi
Kitaibaraki-shi
Ibaraki 319-1535 (JP)**

(74) Representative: **Yeadon IP Limited
Leeds Innovation Centre
103 Clarendon Road
Leeds LS2 9DF (GB)**

(56) References cited:
**JP-A- 11 067 205       JP-A- 2000 072 445**

JP-A- 2003 081 637     JP-A- 2005 011 713
JP-A- 2005 060 162     JP-A- 2005 075 691
JP-A- 2005 324 973     JP-A- 2005 347 134
JP-A- 2006 004 724     JP-A- 2006 019 310
JP-A- 2007 257 890     JP-A- 2009 117 365
US-A1- 2010 227 222

• **JU S H ET AL: "Fine-sized LiNi0.8Co0.15Mn0.05O2 cathode particles prepared by spray pyrolysis from the polymeric precursor solutions", CERAMICS INTERNATIONAL, ELSEVIER, AMSTERDAM, NL, vol. 35, no. 4, 1 May 2009 (2009-05-01), pages 1633-1639, XP025967111, ISSN: 0272-8842, DOI: 10.1016/J.CERAMINT.2008.09.002 [retrieved on 2008-09-30]**
• **JU S H ET AL: "Effects of the ratio of manganese and nickel components on the characteristics of Lix(MnyNi1-y)Oz cathode powders prepared by spray pyrolysis", JOURNAL OF ALLOYS AND COMPOUNDS, ELSEVIER SEQUOIA, LAUSANNE, CH, vol. 469, no. 1-2, 5 February 2009 (2009-02-05), pages 304-309, XP025881603, ISSN: 0925-8388, DOI: 10.1016/J.JALLCOM.2008.01.106 [retrieved on 2008-03-10]**

- LIAN F ET AL: "Comparative study of the preparation and electrochemical performance of LiNi1 /2Mn1/2O2 electrode material for rechargeable lithium batteries", JOURNAL OF APPLIED ELECTROCHEMISTRY, KLUWER ACADEMIC PUBLISHERS, DO, vol. 38, no. 5, 19 January 2008 (2008-01-19), pages 613-617, XP019606208, ISSN: 1572-8838

**Description**

Technical Field

The present invention relates to a method for producing a cathode active material for a lithium ion battery.

Background Art

There has been an increased demand for a nonaqueous lithium ion secondary battery as a high-energy density battery in recent years and various studies are being made concerning the improvement of battery performance from various viewpoints.

This lithium ion secondary battery has a structure consisting of three fundamental elements, namely, a cathode, an anode, and a separator which is interposed between both electrodes and holds an electrolyte. As the cathode and the anode, those produced by coating a slurry obtained by mixing and dispersing an active material, a conductive material, a binder, and, according to the need, a plasticizer in a dispersion medium, to a current collector such as a metal foil or metal mesh.

As the cathode active material among these materials, a complex oxide constituted of lithium and a transition metal such as a cobalt complex oxide ($LiCoO_2$), nickel complex oxide ($LiNiO_2$), and manganese complex oxide ($LiMn_2O_4$) is applied, and various materials based on these compounds have been proposed so far.

The aforementioned lithium complex oxide to be used as the cathode material for a lithium ion secondary battery is generally synthesized by mixing a compound (for example, a carbonate or oxide of Co, Ni, and Mn) of an element used as a main material for a lithium ion secondary cathode material and a lithium compound (for example, lithium carbonate) in a specified ratio, followed by heat treatment. As a method for synthesizing such a lithium complex oxide, for example, Japanese Patent Application Laid-Open No. JP 2006-004724 A discloses a method for producing a precursor material for a lithium ion secondary battery cathode material, the method including pouring an aqueous solution containing one or more types of nitrate of Ni, Mn, or Co or a mixture solution consisting of the above solution and an aqueous solution containing one or more types of nitrate containing a nitrate of Mg, Al, Ti, Cr, Fe, Cu, and Zr in a lithium carbonate suspension to precipitate a complex metal carbonate containing Li and separating the Li-containing complex metal carbonate from the solution by means of solid-liquid separation, followed by calcining.

S. Ju et al. Ceramics International 35 (2007), 1633-1639 discloses the preparation of $LiNi_{0.8}Co_{0.15}Mn_{0.05}O_2$ cathode particles by spray pyrolysis.

Summary of Invention

Technical Problem

The process of producing a cathode active material for a lithium ion battery involves a process of calcining a lithium metal salt complex which is to be an intermediate (precursor, calcination raw material) of the cathode active material for a lithium ion battery. A lot of time is required for this calcination process, causing increased production cost.

In light of this, it is an object of the present invention to reduce the time required for the calcination of a lithium metal salt complex to thereby provide a high-quality cathode active material for a lithium ion battery at low cost.

Solution to Problem

The inventors of the present invention have made earnest studies and, as a result, found that a metal is efficiently oxidized in calcination by mixing an oxidizer or a metal salt containing ions having an oxygenation effect in a lithium metal salt complex which is to be a calcination raw material to thereby shorten the time required for calcination.

According to an aspect of the present invention completed based on the above findings, there is provided a method for producing a cathode active material for a lithium ion battery, the active material being represented by the following compositional formula: $Li_xNi_{1-y}M_yO_{2+\alpha}$; wherein M represents Mn and Co, $0.9 \leq x \leq 1.2$, and $0 < y \leq 0.7$, and $\alpha > 0.1$); the method comprising the steps of:

preparing a lithium-containing metal nitrate solution slurry containing lithium carbonate and nitrates of Ni, Mn and Co, wherein the molar ratio of Ni in the solution is 0.3 or more and wherein the molar ratio of Ni is larger than that of Mn in metals contained in the metal nitrate solution;
spray-drying using a micro-mist drier the lithium-containing metal nitrate solution slurry to obtain a powder of a lithium-containing metal nitrate complex; and
calcining the powder.

In the method for producing a cathode active material for a lithium ion battery according to the present invention, the metals contained in the metal nitrates are Ni, Mn, and Co.

In practising the method for producing a cathode active material for a lithium ion battery according to the present invention, the molar ratio of Ni in the metal contained in the powder is 0.3 or more.

Further, in practising the method for producing a cathode active material for a lithium ion battery according to the present invention, the molar ratio of Ni is higher than the molar ratio of Mn in metals contained in the metal nitrate solution.

In the method for producing a cathode active material for a lithium ion battery according to the present invention, the lithium salt is lithium carbonate.

Advantageous Effects of Invention

According to the present invention, a nitrate oxidizer is contained in the calcination raw material and therefore, oxygen can be supplied from the inside of the raw material during calcination, thereby enabling the reduction of the time required for calcining the lithium salt complex. Also, it becomes unnecessary to control the atmosphere during calcination and therefore, a high-quality cathode active material for a lithium ion battery can be provided at low cost. Also, since an oxidizer is contained in the calcination raw material, the produced cathode active material for a lithium ion battery is put into an excess oxygen condition, ensuring that a lithium ion battery using this active material is improved in various characteristics.

Description of Embodiments

(Structure of a cathode active material for a lithium ion battery)

The cathode active material for a lithium ion battery made according to the present invention is represented by the following compositional formula: $Li_xNi_{1-y}M_yO_{2+\alpha}$ (wherein M represents Mn and Co, $0.9 \leq x \leq 1.2$, and $0 < y \leq 0.7$, and $\alpha > 0.1$).

The ratio of lithium to all metals in the cathode active material for a lithium ion battery is 0.9 to 1.2. This reason is that if the ratio is less than 0.9, it is difficult to keep a stable crystal structure whereas if the ratio exceeds 1.2, the capacity of a battery cannot be kept high.

In the cathode active material for a lithium ion battery made according to the present invention, the content of oxygen is represented by $O_{2+\alpha}$ ($\alpha > 0.1$) as shown in the compositional formula, showing that oxygen is contained excessively. When this cathode active material is used for a lithium ion battery, the characteristics of the battery such as capacity, rate characteristics, and capacity conservation ratio are improved. With regard to $\alpha$, it is preferable that $\alpha > 0.15$ and it is more preferable that $\alpha > 0.20$.

(Method for producing a cathode active material for a lithium ion battery)

A method for producing a cathode active material for a lithium ion battery according to an embodiment of the present invention will be explained in detail.

First, an aqueous solution containing a metal nitrate is manufactured. Among metal salts such as nitrate, hydroxide, carbonate, oxyhydroxide, or the like, a nitrate is more preferable, and thus used in accordance with the present invention, because it has a high effect as an oxidizer. The metals contained in the metal nitrates are Ni, Mn, and Co. Also, at this time, the amount of each metal contained in the metal nitrate solution is regulated such that it has a desired molar ratio. The molar ratio of each metal in the cathode active material is decided in this manner. For Ni contained in the metal nitrate solution, the molar ratio of Ni therein is 0.3 or more. The reason for this is that when the molar ratio of Ni is less than 0.3, the absolute amount of oxygen required for calcining 1 mol of a cathode material is small and therefore, the effect of the metal nitrate oxidizer is obtained only insufficiently. Also, for at least Ni and Mn contained in the metal nitrate solution, the molar ratio of Ni is larger than that of Mn in metals contained in the metal nitrate solution. The reason for this is that when the molar ratio of Ni is smaller than that of Mn, the valence of Ni is divalent, and this avoids the necessity of oxidizing Ni in heat treatment, so that the effect of the metal nitrate oxidizer is only insufficiently obtained.

Next, lithium carbonate is suspended as a lithium source in pure water, and then the aforementioned metal nitrate solution is poured into the suspension to prepare a lithium-containing metal nitrate solution slurry.

Next, the lithium-containing metal nitrate solution slurry is spray-dried by a micro-mist drier to obtain a powder of a lithium-containing metal nitrate complex. The reaction at this time is given by the following several chemical formulae when the metal of the metal nitrate is represented by "M".

With regard to these processes, the following explanations are accomplished as to examples using a metal nitrate. Generally, the metal nitrate is known to lose nitric acid to form a basic salt and this reaction proceeds in the course of drying.

$$M(NO_3)_2 + 1/2Li_2CO_3 \rightarrow 1/2MCO_3 + 1/2M(NO_3)_2 + LiNO_3 \qquad (1)$$

$$M(NO_3)_2 + 1/2Li_2CO_3 + 5/6H_2O \rightarrow 1/3M_3(NO_3)_2(OH)_4 + LiNO_3 + 1/3HNO_3 + 1/2CO_2 \qquad (2)$$

$$M(NO_3)_2 + 1/2Li_2CO_3 + H_2O + 1/4O_2 \rightarrow MOOH + LiNO_3 + HNO_3 + 1/2CO_2 \qquad (3)$$

$$M(NO_3)_2 + 1/2Li_2CO_3 + 3/2H_2O \rightarrow 1/2(M(NO_3)_2(OH)_2 \cdot 2H_2O) + LiNO_3 + 1/2CO_2 \qquad (4)$$

The micro-mist drier is a spray drier utilizing an atomizer, which extends the lithium-containing metal nitrate solution slurry thinly through a plurality of paths by a high-speed airstream and allows these separated slurries to collide with each other at a predetermined collision focal point, to cause a shock wave, thereby enabling the formation of mists several $\mu m$ in size. As the atomizer, one provided with, for example, 4-fluid nozzle is preferable. An atomizer provided with the 4-fluid nozzle has a structure in which two liquid paths and two gas paths are provided symmetrically with respect to the nozzle edge and accomplishes atomization by, for example, the fluid plane at the edge of the nozzle and the collision focal point.

The generated mists are dried in a drying chamber inside of the micro-mist drier, enabling the production of a dry powder of a lithium-containing metal nitrate complex which is primarily constituted of the compound forming the right side of the above equation and has a micro-particle diameter (several $\mu m$).

As mentioned above, the use of a micro-mist drier produces at least the following effects:

(1) Massive spraying of single micron-liquid droplets can be attained;
(2) The liquid droplet average diameter can be controlled by changing the gas-liquid ratio;
(3) The particle distribution of the powder becomes sharp to thereby well restrain the dispersion of particle diameter;
(4) A nozzle clogging phenomenon which occurs in an external mixing system is restrained, ensuring long-time continuous spraying;
(5) A necessary spray amount is easily obtained by regulating the length of the edge;
(6) A dry powder of which the particle diameter has been reduced to 20 to 30 $\mu m$ at minimum by usual drying can be formed into a powder having a micro-particle diameter as small as several $\mu m$; and
(7) Drying and micronization can be carried out at the same time, which improves production efficiency.

Next, the above dry powder is filled in a calcining container having a predetermined size such that it has a predetermined thickness and subjected to an oxidation process in which it is kept under heating in an environment such as the atmosphere where oxidative condition can be kept and to a milling process to obtain a powder of a cathode active material. The reaction at this time is given by the following chemical equations when the metal of the metal nitrate is represented by "M". In any of these equations, an oxygen member is present on the right side of the equation, showing that oxygen is generated from the calcination raw material.

$$1/2MCO_3 + 1/2M(NO_3)_2 + LiNO_3 \rightarrow LiMO_2 + 2NO_2 + 1/2CO_2 + 1/4O_2 \qquad (5)$$

$$1/3M_3(NO_3)_2(OH)_4 + LiNO_3 \rightarrow LiMO_2 + 5/3NO_2 + 2/3H_2O + 1/6O_2 \qquad (6)$$

$$MOOH + LiNO_3 \rightarrow LiMO_2 + NO_2 + 1/2H_2O + 1/4O_2 \qquad (7)$$

$$1/2(M_2(NO_3)_2(OH)_2 \cdot 2H_2O) + LiNO_3 \rightarrow LiMO_2 + 2NO_2 + 3/2H_2O + 1/4O_2 \qquad (8)$$

The oxidation process is applicable in a continuous furnace and other furnaces besides a usual static furnace.

The powder of a lithium-containing metal nitrate complex produced by spray-drying a lithium-containing metal nitrate solution slurry by a micro-mist drier is calcined like this in embodiments of the present invention. For this, all of the charged raw materials except for water are used for the synthesis of a cathode material and therefore, operations such as filtering for separating unnecessary components and impurities are unnecessary. Accordingly, a high-quality cathode active material can be manufactured with high production efficiency at low production cost. Moreover, an oxidizer is contained in a metal salt solution to be blended first and is resultantly contained as it is in a powder of lithium metal salt complex to be calcined, which shows that there is no need to add other oxidizer. Also, it is unnecessary to carry out calcination in an oxygen atmosphere. Accordingly, the calcination time is shortened and a high-quality cathode active material can be manufactured with high production efficiency at low production cost.

Examples

The following examples are given to understand the present invention and its advantage more clearly. However, these examples are not intended to be limiting of the present invention.

(Examples 1 to 3)

First, 517 g of lithium carbonate was suspended in 1.06 l of pure water and then, 4.8 l of a metal salt solution was poured into the suspension. Here, in the metal salt solution, each hydrate of nickel nitrate, cobalt nitrate, and manganese nitrate was formulated such that Ni, Mn, and Co were each contained in a predetermined ratio and the total mol number of Ni, Mn, and Co was 14 mol. In this case, the amount of lithium carbonate to be suspended was one corresponding to x = 1.0 when the product was represented by the chemical formula $Li_xNi_{1-y}M_yO_{2+\alpha}$ and calculated by the following equation.

$$W (g) = \text{Molecular weight of lithium carbonate} \times (\text{Total mol number of Ni, Mn, and Co}) \times 0.5 = 73.9 \times 14 \times 0.5 = 517$$

"0.5" in this equation is the ratio of lithium contents in the product ($Li_xNi_{1-y}M_yO_{2+\alpha}$) and lithium carbonate ($Li_2CO_3$).
A metal nitrate solution was poured into the lithium carbonate suspension produced in this manner to thereby produce a slurry containing metal salt microparticles.
In succession, this slurry was spray-dried by a micro-mist drier (trade name: MDL-100M, manufactured by Fujisaki Electric Co., Ltd.) to obtain 3100 g of a lithium-containing complex (precursor material for a lithium ion secondary battery cathode material) containing a nitrate as an oxidizer.
It was confirmed from XRD diffraction analysis of this complex that the complex was formed from lithium nitrate ($LiNO_3$) and a basic metal nitrate {$M_3(NO_3)_2(OH)_4$: M is a metal component}.
Next, a calcination container formed so as to have an inside dimension of 280 mm (length) × 280 mm (width) and a container height of 100 mm was prepared and the complex formed so as to have a height of 55 mm was filled in this calcination container to carry out oxidation treatment while variously changing predetermined temperature in an air atmosphere and heat retention time (10 to 48 hrs). Then, oxides obtained in different conditions were crushed in the same condition to obtain powders of lithium ion secondary battery cathode materials.
Then, each powder of the obtained cathode material was confirmed to have a layer structure by XRD diffraction analysis and the contents of Li, Ni, Mn, and Co were measured by the ICP method. From the results of analysis, x, y, and $\alpha$ were found when the product was represented by the chemical formula $Li_xNi_{1-y}M_yO_{2+\alpha}$. M in the chemical formula corresponds to Mn and Co. The ratios of obtained Ni, Mn, and Co are described in Table 1.
The powder X-ray diffraction measurement of the powder obtained in each heating time was made to decide the shortest heating time in which good crystallinity was obtained when the intensity ratio of the (003) peak/(104) peak was 0.8 or less.
The electrode used to evaluate battery characteristics was manufactured by coating a material obtained by kneading an active material, a binder, and a conductive material (= 85 : 8 : 7) in NMP (N-methyl pyrrolidone) which was an organic solvent, to an Al foil, followed by drying and then pressing.
A 2032-model coin battery for evaluation was manufactured using the above electrode materials and Li as a counter electrode. 1 M of $LiPF_6$ was used as an electrolyte and a solute prepared by dissolving ethylene carbonate (EC) and dimethyl carbonate (DMC) (ratio by volume of 1 : 1) was used. The battery was made to charge at a voltage of 4.3 V in a constant current and constant voltage mode and made to discharge at a voltage of 3.0 V in a constant current mode to perform a charge/discharge operation. The initial capacity and initial efficiency (discharge amount/charge amount) were confirmed by 0.1C charge/discharge to evaluate the characteristics (discharge capacity and rate characteristics) of the battery.

(Comparative Examples 1 to 3)

First, 517 g of lithium carbonate was suspended in 3.2 l of pure water and then, 4.8 l of a metal salt solution was poured into the suspension. Here, in the metal salt solution, each hydrate of nickel chloride, cobalt chloride, and manganese chloride was formulated such that Ni, Mn, and Co were each contained in a predetermined ratio and the total mol number of Ni, Mn, and Co was 14 mol. In this case, the amount of lithium carbonate to be suspended was one corresponding to x = 1.0 when the product was represented by the chemical formula $Li_xNi_{1-y}M_yO_{2+\alpha}$ and calculated by the following equation:

$$W\ (g) = \text{Molecular weight of lithium carbonate} \times (\text{Total mol number of Ni, Mn, and}$$

$$\text{Co}) \times 0.5 = 73.9 \times 14 \times 0.5 = 517$$

"0.5" in this equation is the ratio of lithium contents in the product ($Li_xNi_{1-y}M_yO_{2+\alpha}$) and lithium carbonate ($Li_2CO_3$).

A metal chloride solution was poured into the lithium carbonate suspension produced in this manner to thereby produce a slurry containing metal salt microparticles.

In succession, this slurry was spray-dried by a micro-mist drier (trade name: MDL-100M, manufactured by Fujisaki Electric Co., Ltd.) to obtain 3100 g of a lithium-containing complex (precursor material for a lithium ion secondary battery cathode material).

It was confirmed from XRD diffraction analysis of this complex that the complex was formed from lithium chloride (LiCl) and a metal carbonate {$MCO_3$: M is a metal component}.

Next, a calcination container formed so as to have an inside dimension of 280 mm (length) × 280 mm (width) and a container height of 100 mm was prepared and the complex formed so as to have a height of 55 mm was filled in this calcination container to carry out oxidation treatment while variously changing predetermined temperature in an air atmosphere and heat retention time (10 to 48 hrs). Then, oxides obtained in different conditions were crushed in the same condition to obtain powders of lithium ion secondary battery cathode materials.

Then, in each powder of the obtained cathode material, the contents of Li, Ni, Mn, and Co were measured by the ICP method. From the results of analysis, x, y, and $\alpha$ were found when the product was represented by the chemical formula $Li_xNi_{1-y}M_yO_{2+\alpha}$. M in the chemical formula corresponds to Mn and Co. The ratios of obtained Ni, Mn, and Co are described in Table 1.

The powder X-ray diffraction measurement of the powder obtained in each heating time was made. However, the crystallinity was so low that the shortest heating time in which good crystallinity was obtained when the intensity ratio of the (003) peak/(104) peak was 0.8 or less was not decided.

(Comparative Examples 4 to 6)

First, 1552 g of lithium carbonate was suspended in 3.2 l of pure water and then, 4.8 l of a metal salt solution was poured into the suspension. Here, in the metal salt solution, each hydrate of nickel chloride, cobalt chloride, and manganese chloride was formulated such that Ni, Mn, and Co were each contained in a predetermined ratio and the total mol number of Ni, Mn, and Co was 14 mol. In this case, the amount of lithium carbonate to be suspended was one corresponding to x = 1.0 when the product was represented by the following chemical formula: $Li_xNi_{1-y}M_yO_{2+\alpha}$ and calculated by the following equation:

$$W\ (g) = \text{Molecular weight of lithium carbonate} \times (\text{Total mol number of Ni, Mn, and}$$

$$\text{Co}) \times 1.5 = 73.9 \times 14 \times 1.5 = 1552$$

"1.5" in this equation is a value obtained by adding the amount (1.0) removed by washing to 0.5 which is the ratio of lithium contents in the product ($Li_xNi_{1-y}M_yO_{2+\alpha}$) and lithium carbonate ($Li_2CO_3$).

A metal chloride solution was poured into the lithium carbonate suspension produced in this manner to thereby precipitate microparticles of lithium-containing carbonate in the solution.

This precipitate was filtered/separated and then washed with a saturated lithium carbonate solution having a concentration of 13.8 g/L. The washing was performed using a filter press to the extent that the concentration of chlorine in the filtrate reached the same level as the saturated chlorine concentration in the saturated lithium carbonate. 20 l of the saturated lithium carbonate solution was required for this washing.

After the precipitate was washed, it was dried to obtain 2160 g of a lithium-containing carbonate (precursor material for a lithium ion secondary battery cathode material).

It was confirmed from XRD diffraction analysis of this complex that the complex was formed primarily from a metal carbonate ($MCO_3$: M is a metal component).

Next, a calcination container formed so as to have an inside dimension of 280 mm (length) × 280 mm (width) and a container height of 100 mm was prepared and the complex formed so as to have a height of 55 mm was filled in this calcination container to carry out oxidation treatment while variously changing predetermined temperature in an air atmosphere and heat retention time (10 to 48 hrs). Then, oxides obtained in different conditions were crushed in the same condition to obtain powders of lithium ion secondary battery cathode materials.

Then, each powder of the obtained cathode material was confirmed to have a layer structure by XRD diffraction analysis and the contents of Li, Ni, Mn, and Co were measured by the ICP method. From the results of analysis, x, y, and $\alpha$ were found when the product was represented by the chemical formula $Li_xNi_{1-y}M_yO_{2+\alpha}$. M in the chemical formula corresponds to Mn and Co. The ratios of obtained Ni, Mn, and Co are described in Table 1.

The powder X-ray diffraction measurement of the powder obtained in each heating time was made to decide the shortest heating time in which good crystallinity was obtained when the intensity ratio of the (003) peak/(104) peak was 0.8 or less.

The electrode used to evaluate battery characteristics was manufactured by coating a material obtained by kneading an active material, a binder, and a conductive material (= 85 : 8 : 7) in NMP (N-methyl pyrrolidone) which was an organic solvent, to an Al foil, followed by drying and then pressing.

A 2032-model coin battery for evaluation was manufactured using the above electrode materials and Li as a counter electrode. 1 M of $LiPF_6$ was used as an electrolyte and a solute prepared by dissolving ethylene carbonate (EC) and dimethyl carbonate (DMC) (ratio by volume of 1 : 1) was used. The battery was made to charge at a voltage of 4.3 V in a constant current and constant voltage mode and made to discharge at a voltage of 3.0 V in a constant current mode to perform a charge/discharge operation. The initial capacity and initial efficiency (discharge amount/charge amount) were confirmed by 0.1C charge/discharge to evaluate the characteristics (discharge capacity and rate characteristics) of the battery.

Each test condition and evaluating result in the above examples and comparative examples are shown in Table 1.

[Table 1]

| | x | α | Ni | Mn | Co | Calcination temperature (°C) | Shortest calcination time (h) | Discharge capacity (mAh/g) | Rate characteristics (%) |
|---|---|---|---|---|---|---|---|---|---|
| Example 1 | 1.00 | 0.15 | 0.33 | 0.33 | 0.33 | 1000 | 12 | 155 | 92 |
| Example 2 | 1.00 | 0.16 | 0.60 | 0.25 | 0.15 | 880 | 12 | 171 | 90 |
| Example 3 | 1.01 | 0.16 | 0.80 | 0.10 | 0.10 | 810 | 12 | 190 | 89 |
| Comparative Example 1 | 1.00 | - | 0.33 | 0.33 | 0.33 | 1000 | - | - | - |
| Comparative Example 2 | 1.00 | - | 0.60 | 0.25 | 0.15 | 880 | - | - | - |
| Comparative Example 3 | 1.00 | - | 0.80 | 0.10 | 0.10 | 810 | - | - | - |
| Comparative Example 4 | 1.00 | 0.06 | 0.33 | 0.33 | 0.33 | 1000 | 18 | 153 | 90 |
| Comparative Example 5 | 1.01 | 0.02 | 0.60 | 0.25 | 0.15 | 880 | 30 | 169 | 87 |
| Comparative Example 6 | 1.01 | 0.04 | 0.80 | 0.10 | 0.10 | 810 | 40 | 180 | 80 |

Examples 1 to 3 were each reduced in calcination time and improved in discharge capacity and rate characteristics.

In Comparative Examples 1 to 3, the lithium metal salt solution slurry was dried without removing chlorine ions. Therefore, the calcination raw material was contaminated with a large amount of chlorine ions and these chlorine ions were not perfectly removed during calcination. This is the reason why a good cathode active material crystal which attained excellent battery characteristics was not obtained.

In Comparative Examples 4 to 6, a good crystal was obtained. However, no oxidizer was contained in the calcination raw material though chlorine ions were removed by washing and the calcination time required for efficient progress of the oxidation of Ni was longer than those of Examples 1 to 3.

**Claims**

1. A method for producing a cathode active material for a lithium ion battery, the active material being represented by the following compositional formula: $Li_xNi_{1-y}M_yO_{2+\alpha}$;
   wherein M represents Mn and Co, $0.9 \leq x \leq 1.2$, and $0 < y \leq 0.7$, and $\alpha > 0.1$);
   the method comprising the steps of:

   preparing a lithium-containing metal nitrate solution slurry containing lithium carbonate and nitrates of Ni, Mn and Co, wherein the molar ratio of Ni in the solution is 0.3 or more and wherein the molar ratio of Ni is larger than that of Mn in metals contained in the metal nitrate solution;
   spray-drying using a micro-mist drier the lithium-containing metal nitrate solution slurry to obtain a powder of a lithium-containing metal nitrate complex; and
   calcining the powder.

**Patentansprüche**

1. Verfahren zum Produzieren eines Kathodenaktivmaterials für eine Lithiumionenbatterie, wobei das Aktivmaterial durch die folgende Zusammensetzungsformel wiedergegeben wird: $Li_xNi_{1-y}M_yO_{2+\alpha}$

   wobei M für Mn und Co steht, ($0,9 \leq x \leq 1,2$ und $0 < y \leq 0,7$, und $\alpha > 0,1$);
   wobei das Verfahren die Schritte umfasst:

   Herstellen einer lithiumhaltigen Metallnitratlösungsaufschlämmung, die Lithiumcarbonat und Nitrate von Ni, Mn und Co enthält, wobei das Molverhältnis von Ni in der Lösung 0,3 oder mehr beträgt, und wobei das Molverhältnis von Ni größer als das von Mn in Metallen ist, die in der Metallnitratlösung enthalten sind;
   Sprühtrocknen der lithiumhaltigen Metallnitratlösungsaufschlämmung unter Verwendung eines Mikronebeltrockners, um ein Pulver eines lithiumhaltigen Metallnitratkomplexes zu erhalten; und
   Calcinieren des Pulvers.

**Revendications**

1. Procédé de production d'un matériau actif de cathode pour une batterie au lithium-ion, le matériau actif étant représenté par la formule de composition suivante :

   $Li_xNi_{1-y}M_yO_{2+\alpha}$ ;

   dans lequel M représente les atomes Mn et Co ($0,9 \leq x \leq 1,2$ et $0 < y \leq 0,7$, et $\alpha > 0,1$) ;
   le procédé comportant les étapes de :

   préparation d'une suspension liquide d'un nitrate métallique contenant du lithium qui contient du carbonate de lithium ou des nitrates de Ni, de Mn et de Co, dans lequel le rapport molaire de Ni dans la solution est de 0,3 ou plus et dans lequel le rapport molaire de Ni est plus important que celui du Mn dans les métaux contenus dans la solution de nitrate métallique ;
   séchage par atomisation à l'aide d'un séchoir à microbrume de la suspension liquide de nitrate métallique contenant du lithium pour obtenir une poudre d'un complexe de nitrate métallique contenant du lithium ; et

calcination de la poudre.

## REFERENCES CITED IN THE DESCRIPTION

**Patent documents cited in the description**

- JP 2006004724 A

**Non-patent literature cited in the description**

- **S. JU et al.** *Ceramics International,* 2007, vol. 35, 1633-1639